# DEMANDE DE BREVET EUROPEEN

(11) **EP 0 896 208 A1**
(43) Date de publication de la demande: **10.02.1999**
(21) Numéro de dépôt: 98401993.5
(22) Date de dépôt: 05.08.1998
(51) Int. Cl.: G01F 11/18, G01F 13/00

(54) **Dispositif de dosage pour produits dits secs**

(30) Priorité: 08.08.1997 FR 9710200
(71) Demandeur: A.R.C.I.L., 78400 Chatou (FR)
(72) Inventeur: Becquart, Patrick, 92300 Levallois-Perret (FR); Marin, Eric, 78150 Le Chesnay (FR)
(74) Mandataire: Jacquard, Philippe Jean-Luc

(57) **Abrégé**

Dispositif de dosage pour produits dits "secs", du type comportant un élément vibrant tel qu'une auge vibrante présentant au moins une ouverture de sortie desdits produits caractérisé en ce qu'au moins une dite ouverture de sortie est reliée à travers une manchette souple (7) à un ensemble de dosage à tiroir.

## Description

La présente invention a pour objet un dispositif de dosage pour produits solides tels que des produits secs natures, enrobés ou glacés, par exemple des céréales, des grains de riz soufflés, des noisettes, etc, et plus particulièrement des produits secs se présentant sous forme de mélanges.

On connaît des dispositifs de dosage pour produits secs qui mettent en oeuvre une trémie intermédiaire de stockage qui est une source habituelle de dysfonctionnement, les produits secs étant en effet sujet au voutage et au bourrage.

En pratique, l'utilisation de trémies est délicate et demande de nombreuses précautions, telles que la mise en oeuvre de systèmes anticolmatage, mécaniques ou pneumatiques.

La présente invention a pour objet un dispositif de dosage qui permette d'éviter le recours à une trémie intermédiaire de stockage, celle-ci étant remplacée par un élément vibrant tel qu'une auge vibrante de répartition présentant au moins une ouverture de sortie desdits produits, dans laquelle les produits secs sont distribués sous une faible épaisseur, ne pouvant ainsi ni voûter ni bourrer.

Selon l'invention, au moins une dite ouverture de sortie est reliée à un ensemble de dosage à tiroir, à travers un dispositif de découplage par exemple une manchette avantageusement souple ou plus généralement des conduits liés les uns aux autres avec un ou des degrés de libertés suffisants.

La mise en oeuvre d'une auge vibrante permet une alimentation au fur et à mesure à partir d'un dispositif tel qu'un convoyeur alors que la présence de dispositifs tels que des manchettes souples permet d'une part de constituer une réserve de produits secs qui seront ensuite distribués par l'ensemble de dosage à tiroir, et d'autre part de découpler mécaniquement l'auge vibrante de l'ensemble de dosage à tiroir tout en évitant un bourrage des produits.

Au moins une manchette souple présente un volume intérieur qui est avantageusement du même ordre que le volume unitaire à doser en un cycle.

L'ensemble de dosage à tiroir présente avantageusement une plaque-support et une contre-plaque, la contre-plaque étant disposée au-dessus de la plaque-support et présentant au moins une ouverture reliée à une extrémité aval d'une dite manchette souple, et la plaque-support présentant au moins une ouverture décalée par rapport à ladite ouverture de la contre-plaque, et en ce qu'il comporte un tiroir intercalé entre la contre-plaque et la plaque-support, ledit tiroir étant déplaçable entre une position dite d'admission dans laquelle au moins une ouverture du tiroir est en communication avec ladite ouverture de la contre-plaque et une position dite d'évacuation dans laquelle ladite ouverture du tiroir est en communication avec ladite ouverture de la plaque-support, chaque ouverture du tiroir définissant un volume de dosage desdits produits.

L'auge vibrante présente avantageusement une pluralité d'ouvertures de sortie dont le nombre n est identique au nombre de récipients à remplir au cours d'un cycle ou bien un multiple de celui-ci, et qui sont de préférence réparties de la même façon que les récipients.

La contre-plaque, la plaque-support et le tiroir présentent avantageusement n dites ouvertures réparties de la même façon que les récipients à remplir en un cycle.

Le dispositif comporte préférentiellement un dispositif de réglage de l'écartement entre la contre-plaque et la plaque-support, ce qui permet en particulier de faire varier le volume des doses. Le tiroir peut présenter une plaque supérieure et une plaque inférieure et un embout tubulaire pour chaque ouverture du tiroir, un dit embout tubulaire assurant une communication entre une face supérieure de la plaque supérieure et la face inférieure de la plaque inférieure pour définir ladite ouverture du tiroir. Il peut en particulier comporter au moins un dispositif élastique assurant un contact plan sur plan d'une part entre la face supérieure de la plaque supérieure et la face inférieure de la contre-plaque et d'autre part entre la face inférieure de la plaque inférieure et la face supérieure de la plaque-support.

Le dispositif élastique peut être un ressort disposé coaxialement à un dit embout tubulaire.

Selon un mode de réalisation préféré, le ou les embouts tubulaires est (sont) télescopiques, ce qui permet de faire varier les doses distribuées simplement en modifiant la distance entre la contre-plaque et la plaque-support.

Le dispositif peut comporter un dispositif d'alimentation de l'auge vibrante comportant un élément d'interface avec un dispositif de convoyage et un conduit d'acheminement éventuellement orientable, pour permettre une vidange du convoyeur en fin d'opération, et la récupération des produits secs encore en circuit.

L'auge vibrante présente avantageusement un fond muni d'au moins un déflecteur destiné à assurer une répartition granulométrique sensiblement uniforme, notamment s'il y a à répartir le produit dans plusieurs récipients, et donc à créer plusieurs doses.

Selon un mode de réalisation préféré, le dispositif est caractérisé en ce que pour n ouvertures de diamètre d comprenant m rangées transversales de P ouvertures, lesdits déflecteurs de l'auge sont disposés de manière que chaque ouverture soit limitée latéralement par un espace de largeur l avec l₁ ≃ md pour la première rangée à partir de l'entrée d'alimentation, l ≃ (m - 1) d pour la suivante et ainsi de suite, et lₘ ≃ d pour la dernière rangée.

D'autres caractéristiques et avantages de l'invention apparaîtront mieux à la lecture de la description qui va suivre, donnée à titre d'exemples non limitatifs en liaison avec les dessins ci-annexés, dans lesquels :
- les figures 1 et 2 représentent, en coupe verticale, un mode de réalisation préféré d'un dispositif selon l'invention, respectivement en position d'admission et en position d'évacuation des produits ;

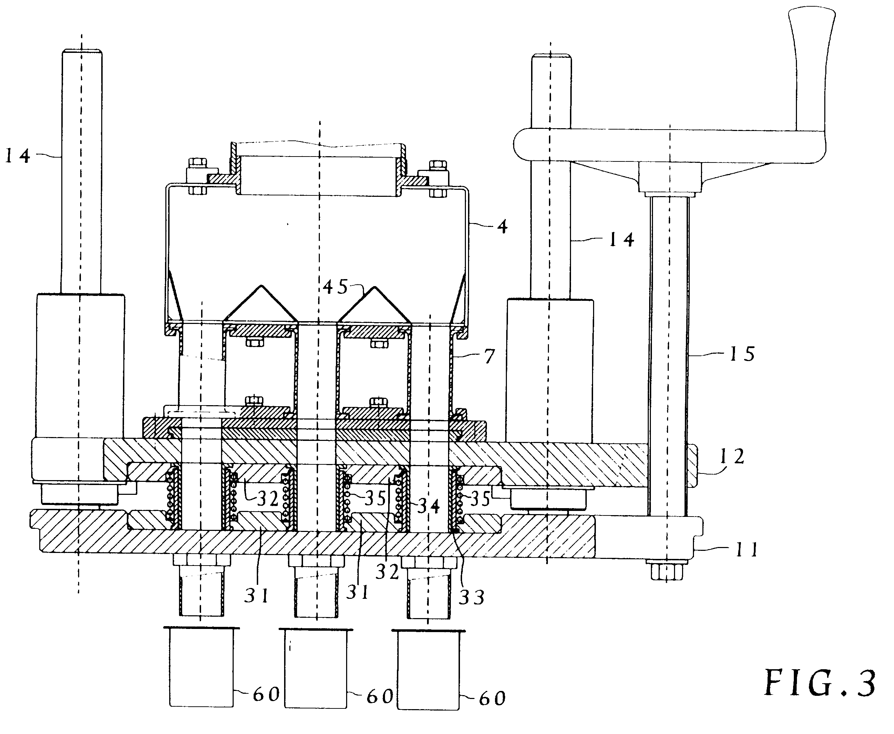

- la figure 3 représente en coupe verticale un détail d'un mode de réalisation préféré de l'ensemble distributeur à tiroir ;
- la figure 4 représente en vue de dessus un mode de réalisation préféré de déflecteurs dont est pourvu le fond de l'auge vibrante.

D'une manière générale, le dispositif de dosage comporte un ensemble d'alimentation et un ensemble de dosage à tiroir ainsi qu'un ensemble de supportage.

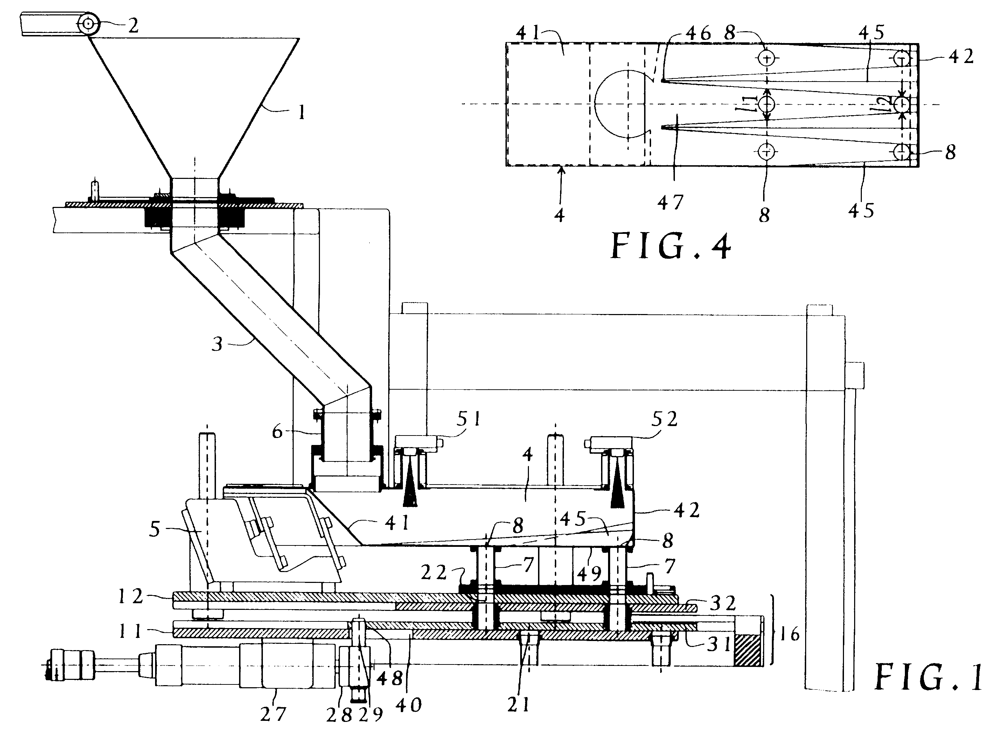

En se référant à la figure 1, l'ensemble d'alimentation comporte un élément d'interface, par exemple un entonnoir 1, alimenté par un système de convoyage amont 2 qui amène les produits secs à un conduit d'acheminement 3, éventuellement orientable suivant une position "travail" (représentée) et une position "purge" permettant la vidange du produit présent dans le circuit en amont du dispositif de dosage dans un récipient convenant à sa récupération. Une auge vibrante 4 commandée par exemple par un vibrateur électromagnétique 5 est alimentée par le dispositif d'alimentation amont directement ou, suivant un mode de réalisation préféré, raccordée au conduit d'acheminement 3 soit directement, soit par une manchette souple 6. Des manchettes souples 7 assurent un passage entre des trous 8 disposés en fond de l'auge 4 et ceux disposés dans une contre-plaque 12 de l'ensemble de dosage, trous bien évidement en nombre identique et de préférence répartis de la même façon.

Le dispositif de dosage 10 comporte une plaque-support 11 et une contre-plaque parallèle 12, l'écartement entre la plaque-support 11 et la contre-plaque 12 étant réglable par un moyen approprié tel un ou plusieurs dispositifs de guidage et un dispositif de translation, par exemple des colonnes de guidage 14 et une vis de manoeuvre 15.

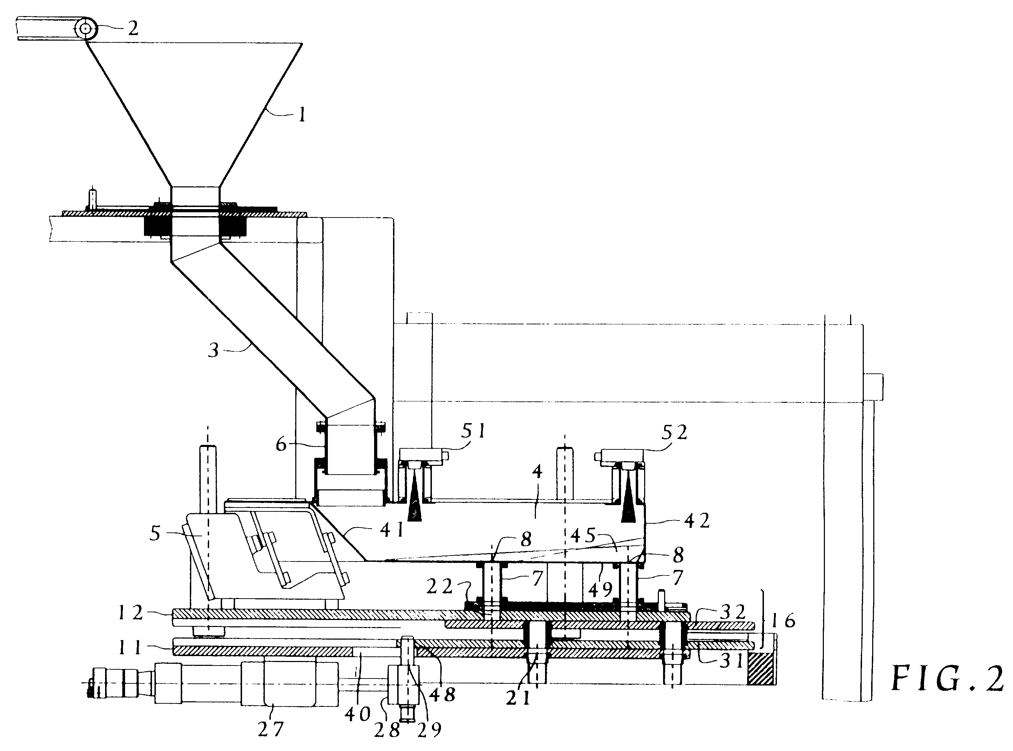

La plaque 11 et la contre-plaque 12 sont percées de trous respectivement 21 et 22 dont le nombre et la répartition peuvent être identiques au nombre et à la répartition des récipients à remplir en un cycle de fonctionnement, les perçages 22 de la contre-plaque 12 se trouvant simplement décalés par rapport à ceux de la plaque 11. Dans le cas où les récipients à remplir sont de grande dimension, le nombre de trous peut être un multiple de celui de nombre des récipients. La plaque-support 11 et la contre-plaque 12 sont conçues pour qu'un tiroir 16 puisse coulisser entre les deux, entre une position dite d'admission représentée à la figure 1 et une position dite d'évacuation représentée à la figure 2, sous l'action alternée d'un actionneur tel un vérin pneumatique 27.

Le dit tiroir 16 est composé d'une partie inférieure 31 et d'une partie supérieure 32, chaque partie se présentant comme une plaque portant des embouts tubulaires respectivement 33 et 34.

La face plane inférieure de la plaque inférieure 31 et la face plane supérieure de la plaque supérieure 32 sont maintenues en contact respectivement avec la face supérieure de la plaque-support 11 et la face inférieure de la contre-plaque 12 sous l'action des ressorts 35, de manière à créer une étanchéité plan sur plan, et les embouts 33 et 34 peuvent coulisser les uns dans les autres et former ainsi des tubes télescopiques, identiques en nombre et en répartition aux trous 21 et 22 déjà décrits, percés dans la plaque-support 11 et la contre-plaque 12.

Le déplacement du tiroir 16 est assuré par le vérin pneumatique 27 dont la tige 28 porte un doigt 29 qui passe à travers une rainure 40 de la plaque-support 11 et vient s'engager dans un trou 48 de la plaque inférieure 31.

Lorsque l'on fait varier l'écartement entre la plaque-support 11 et la contre-plaque 12, l'écartement entre la plaque inférieure 31 et la plaque supérieure 32 du tiroir 16 varie également, ce qui provoque un déplacement des embouts télescopiques 33 et 34. Ceci permet de faire varier le volume des doses des produits à distribuer.

Le fonctionnement du dispositif est le suivant :

Le produit sec à doser est transporté jusqu'à l'élément d'interface 1 par un moyen adapté tel un transporteur vibrant ou un convoyeur 2.

Il est acheminé ensuite par le conduit 3 jusqu'à l'entrée de l'auge vibrante 4 qui est étudiée ainsi qu'il sera précisé dans la suite de la description, pour assurer sa répartition homogène dans et au-dessus des manchettes de liaison 7. En particulier, les déflecteurs 45 disposés dans le fond 49 de l'auge vibrante 4 permettent une répartition uniforme des particules fines présentes dans le produit sec entre les différentes doses, évitant ainsi les phénomènes de ségrégation rencontrés parfois dans les dispositifs vibrants.

La figure 1 représente le dispositif en position d'admission. La position du tiroir 16 est telle que les tubes télescopiques 33 et 34 se situent juste en-dessous des trous 22 disposés dans la contre-plaque 12. Tout ou partie du produit présent dans les manchettes 7 tombe alors par gravité dans les tubes 33 et 34.

La figure 2 représente le dispositif en position d'évacuation. Le tiroir 16 est translaté de façon à ce que les tubes 33 et 34 se trouvent juste au-dessus des trcus 21 disposés dans la plaque inférieure 11. La dose (volume compris à l'intérieur des tubes 33 et 34) tombe alors dans les récipients 60 à remplir. Cette dose est réglable par translation de 12 par rapport à 11.

L'architecture décrite n'utilise pas de trémie intermédiaire de stockage qui, comme mentionné plus haut, est une source habituelle de bourrage dans les systèmes connus.

En outre, l'utilisation de manchettes 7 entre l'auge vibrante de répartition 4 et l'ensemble de dosage permet de constituer une pré-dose dans les manchettes 7 et ainsi d'augmenter la cadence de fonctionnement du dispositif de dosage.

En particulier, le volume des manchettes 7 est choisi de manière à être supérieur (ou égal) au volume des doses contenues dans les tubes télescopiques 33 et 34, ce qui permet d'optimiser le cycle. Le remplissage des manchettes 7 s'effectuant continuellement à partir de l'auge vibrante 4, ceci permet d'assurer leur remplissage "en temps masqué" pendant les mouvements de va et vient du tiroir 16. Ceci permet d'éviter un arrêt inutile du tiroir 16, tout en maintenant un niveau et un volume de produit minimum dans l'auge vibrante 4.

En particulier, on tiendra compte du volume maximal de la dose, permis par le déplacement télescopique des tubes 33 et 34. On pourra alors choisir le volume des manchettes 7 pour que ce dernier soit supérieur ou égal au volume maximal précité.

Il est en outre particulièrement avantageux de disposer, au niveau de l'auge vibrante 4, au moins un capteur de niveau, et de préférence un capteur de niveau bas 51 situé de préférence à l'entrée 41 de l'auge 4 et un capteur de niveau haut 52 de préférence à l'extrémité 42 de l'auge 4. Le ou les capteurs est (sont) couplé(s), fonctionnellement à un dispositif de commande de l'alimentation en produits, de l'auge vibrante 4.

Le dépassement du niveau haut provoque l'interruption du fonctionnement du dispositif 2 et donc de l'alimentation en produits. Par contre, si le niveau devient inférieur au niveau bas, alors le dispositif est remis en service. Ceci permet d'assurer que l'auge vibrante 4 sera toujours correctement alimentée en produits tout en évitant des phénomènes de bourrage.

Alternativement, il est possible d'alimenter l'auge vibrante 4 en continu en tenant compte du débit normal des produits dosés.

Comme le montre la figure 4, les déflecteurs 45, selon le mode de réalisation représenté, ont en vue de dessus un profil évolutif décroissant, par exemple triangulaire, dont la pointe 46 est dirigée vers l'entrée 41 de l'auge vibrante 4. L'espace 47 de largeur l situé entre les déflecteurs se rétreint progressivement au fur et à mesure que l'on se rapproche de la paroi 42.

Dans l'exemple représenté, le fond 49 de l'auge vibrante 4 présente n = 6 ouvertures 8 comprenant m = 2 rangées transversales de p = 3 ouvertures 8. Pour la première rangée à partir de l'entrée 41, chaque ouverture occupe l₁ ≅ md (soit l₁ ≅ 2d, d désignant le diamètre d'une ouverture 8). Pour l'autre rangée, située au voisinage de la paroi 42, chaque ouverture occupe pratiquement la totalité de la largeur l (l ≅ d).

Dans le cas où m et P sont quelconques, les ouvertures 8 de la première rangée à partir de l'entrée 41 occupent l₁ ≅ md, l₂ ≅ (m - l) d pour la rangée suivante et ainsi de suite jusqu'à la dernière rangée pour laquelle lₘ ≅ d.

## Revendications

1. Dispositif de dosage pour produits dits "secs", du type comportant un élément vibrant tel qu'une auge vibrante présentant au moins une ouverture de sortie desdits produits, caractérisé en ce que le dispositif de dosage est essentiellement dépourvu d'un élément tel qu'une trémie intermédiaire de stockage susceptible de produire un phénomène de voutage ou de bourrage et en ce qu'au moins une dite ouverture de sortie est reliée à un ensemble de dosage à tiroir à travers un dispositif de liaison présentant au moins un degré de liberté, par exemple une manchette souple (7).

2. Dispositif selon la revendication 1, caractérisé en ce que l'ensemble de dosage à tiroir présente une plaque-support (11) et une contre-plaque (12), la contre-plaque (12) étant disposée au-dessus de la plaque-support (11) et présentant au moins une ouverture reliée à une extrémité aval d'une dite manchette souple (7), et la plaque-support (11) présentant au moins une ouverture décalée par rapport à ladite ouverture de la contre-plaque (12), et en ce qu'il comporte un tiroir (16) intercalé entre la contre-plaque (12) et la plaque-support (11), ledit tiroir (16) étant déplaçable entre une position dite d'admission dans laquelle au moins une ouverture du tiroir (16) est en communication avec ladite ouverture de la contre-plaque (12) et une position dite d'évacuation dans laquelle ladite ouverture du tiroir (16) est en communication avec ladite ouverture de la plaque-support (11), chaque ouverture du tiroir (16) définissant un volume de dosage desdits produits.

3. Dispositif selon la revendication 2, caractérisé en ce qu'au moins une manchette souple (7) présente un volume intérieur du même ordre de grandeur que le volume unitaire à doser en un cycle.

4. Dispositif selon l'une des revendications 1 à 3 caractérisé en ce que l'auge vibrante (4) présente une pluralité d'ouvertures de sortie (8) dont le nombre n est identique au nombre des récipients (60) à remplir en un cycle, ou bien un multiple de celui-ci.

5. Dispositif selon la revendication 4, caractérisé en ce que lesdites ouvertures de sortie (8) de l'auge vibrante (4) sont réparties de la même façon que les récipients (60) à remplir en un cycle.

6. Dispositif selon une des revendications précédentes, caractérisé en ce que la plaque-support (11), la contre-plaque (12) et le tiroir (16) présentent n dites ouvertures (21,22) réparties de la même façon que les récipients (60) à remplir en un cycle.

7. Dispositif selon une des revendications précédentes, caractérisé en ce qu'il comporte un dispositif d'alimentation de l'auge vibrante (4) comportant un élément d'interface (1) avec un dispositif (2) de convoyage utilisable pour parfaire la mise en condition du produit à doser, notamment par mise en température ou dépoussiérage et un conduit d'acheminement (3) éventuellement orientable de façon à pouvoir récupérer le produit lors des arrêts ou changements de production.

8. Dispositif selon une des revendications précédentes, caractérisé en ce que l'auge vibrante (4) présence un fond (49) muni d'au moins un déflecteur (45) destiné à assurer une répartition granulométrique sensiblement uniforme des produits.

9. Dispositif selon la revendication 8, caractérisé en ce que pour n ouvertures (8) de diamètre d comprenant m rangées transversales de P ouvertures, lesdits déflecteurs (45) de l'auge (4) sont disposés de manière que chaque ouverture (8) soit limitée latéralement par un espace de largeur l avec l₁ ≅ md pour la première rangée à partir de l'entrée d'alimentation, l ≅ (m - 1) d pour la suivante et ainsi de suite, et lₘ ≅ d pour la dernière rangée.

10. Dispositif selon une des revendications précédentes, caractérisé en ce que l'auge vibrante (4) présente au moins un capteur (51, 52) du niveau des produits et un dispositif de commande de l'alimentation en produits de l'auge vibrante (4) qui est couplé fonctionnement audit capteur (51, 52).
